# EUROPEAN PATENT APPLICATION

(11) **EP 1 424 525 A2**
(43) Date of publication of application: **02.06.2004**
(21) Application number: 03257443.6
(22) Date of filing: 26.11.2003
(51) Int. Cl.: F23R 3/00, F23M 5/00, B23P 6/00

(54) **Method and apparatus for cleaning combustor liners**

(30) Priority: 26.11.2002 US 304305
(71) Applicant: GENERAL ELECTRIC COMPANY, Schenectady, NY 12345 (US)
(72) Inventor: Farmer, Gilbert, Cincinnati Ohio 45239 (US); Fehrenbach, Jeffrey Arnold, Cincinnati Ohio 45255 (US)
(74) Representative: Goode, Ian Roy

(57) **Abstract**

A method for removing thermal barrier coating material from at least one opening. The method includes providing a mixture (120) of water and a plurality of beads, and directing the mixture by means of a nozzle (102) into the at least one opening to facilitate removing thermal barrier coating material obstructing the opening.

## Description

This invention relates generally to gas turbine engines, and more specifically to a method and apparatus for cleaning combustor liners used with gas turbine engines.

Gas turbine engines typically include a compressor for compressing air. The compressed air is mixed with a fuel and channeled to a combustor, wherein the fuel/air mixture is ignited within a combustion chamber to generate hot combustion gases. At least some known combustors include a dome assembly, a cowling, and liners to channel the combustion gasses to a turbine, which extracts energy from the combustion gases for powering the compressor, as well as producing useful work to propel an aircraft in flight or to power a load., such as an electrical generator. The liners typically are coupled to the dome assembly and extend downstream from the dome assembly to define the combustion chamber.

Increasing the operating temperature of a combustor generally facilitates increasing the efficiency of a gas turbine engine. However, the operating temperature of the combustor may be limited by the temperature limitation of the combustor liner. Accordingly, at least some known combustor liners include a plurality of circumferentially-spaced openings that extend through the combustor liner and may be obliquely aligned with an inner surface of the liner. The openings in the liner convectively cool the liner and may also provide film convection cooling to the liner, wherein a thin protective film boundary of cool air flows along the inner surface of the liner. The cool air flowing along the combustor liner inner surface forms a protective boundary between the liner and the hot combustion gases to insulate the liner from the hot combustion gases.

Even with thin film convection cooling, however, the combustor liner materials absorb heat. Over time, thermal creep and low cycle fatigue may increase in the liner. Therefore, a thermal barrier coating may also be applied to the inner surface of the combustor liner to provide thermal insulation against the hot combustion gases. Thermal barrier coatings reduce an amount of cooling air required for a given combustion gas temperature, or alternatively, allow an increase in a combustion gas temperature for increasing efficiency of the engine.

During application of the thermal barrier coating and operation of the gas turbine engine, coating particles may build up within and/or over the openings in the liner thereby partially or completely obstructing the openings. To facilitate more efficient operation of the gas turbine engine combustor, any particulate matter obstructing the openings should be removed from the openings. However, removing the thermal barrier coating may be a time-consuming task. Furthermore, it may be difficult to remove particles from liner openings that are adjacent a liner support member because of the limited space between the liner and the liner support member.

According to the present invention, a method is provided for removing thermal barrier coating material from at least one opening. The method includes providing a mixture of water and a plurality of beads, and directing the mixture into the at least one opening to facilitate removing thermal barrier coating material obstructing the opening.

A nozzle is provided including a body having a first end and a second end. The body includes a length greater than 9 inches measured between the first end and the second end. The nozzle also includes a passageway extending through the nozzle body from the first end to the second end. The passageway includes a central axis extending therethrough and is configured to direct a fluid mixture into at least one opening when the passageway central axis is obliquely aligned with a central axis of the at least one opening to facilitate removing thermal barrier coating material obstructing the at least one opening.

A nozzle assembly is provided for removing thermal barrier coating material from at least one opening in a gas turbine engine combustor liner. The assembly includes a nozzle having a first end, a second end, and a passageway extending through the nozzle from the first end to the second end. The nozzle includes a length greater than approximately 9 inches measured between the first end and the second end. The passageway includes a central axis extending therethrough. The nozzle assembly also includes a fluid mixture including water and a plurality of beads. The nozzle is configured to direct the fluid mixture into the at least one opening when the passageway central axis is obliquely aligned with a central axis of the at least one opening to facilitate removing thermal barrier coating material obstructing the at least one opening.

Embodiments of the invention will now be described, by way of example, with reference to the accompanying drawings, in which:
Figure 1 is a schematic illustration of a gas turbine engine;
Figure 2 is a cross-sectional view of an exemplary combustor assembly that may be used with the gas turbine engine shown in Figure 1;
Figure 3 is an enlarged view of a portion of the combustor assembly shown in Figure 2 taken along area 3; and
Figure 4 is a front view of an exemplary nozzle that may be used for removing material from a portion of the combustor shown in Figures 2 and 3.

As used herein, the term "beads" refers to any solid particle. For example, solid particles may include solid particles of glass, metal, and/or plastic. The above examples of solid particles are exemplary only, and are not meant to limit the meaning of the term "beads". In addition, although the invention is described herein in association with a gas turbine engine, and more specifically for use with openings within a gas turbine engine combustor liner, it should be understood that the present invention may be applicable to any opening. Accordingly, practice of the present invention is not limited to gas turbine engine combustor liners.

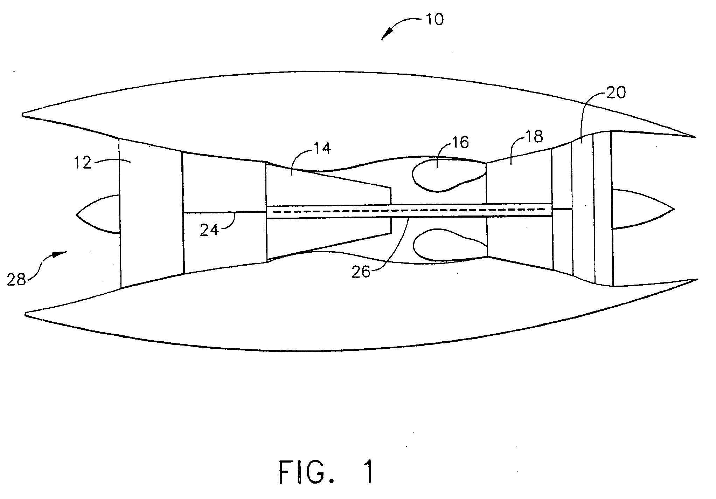

Figure 1 is a schematic illustration of a gas turbine engine 10 including a low pressure compressor 12, a high pressure compressor 14, and a combustor assembly 16. Engine 10 also includes a high pressure turbine 18, and a low pressure turbine 20. Compressor 12 and turbine 20 are coupled by a first shaft 24, and compressor 14 and turbine 18 are coupled by a second shaft 26. In one embodiment, engine 10 is a GE90 engine available from General Electric Aircraft Engines, Cincinnati, Ohio.

In operation, air flows through low pressure compressor 12 from an inlet side 28 of engine 10 and compressed air is supplied from low pressure compressor 12 to high pressure compressor 14. Compressed air is then delivered to combustor assembly 16 where it is mixed with fuel and ignited. The combustion gases are channeled from combustor 16 to drive turbines 18 and 20.

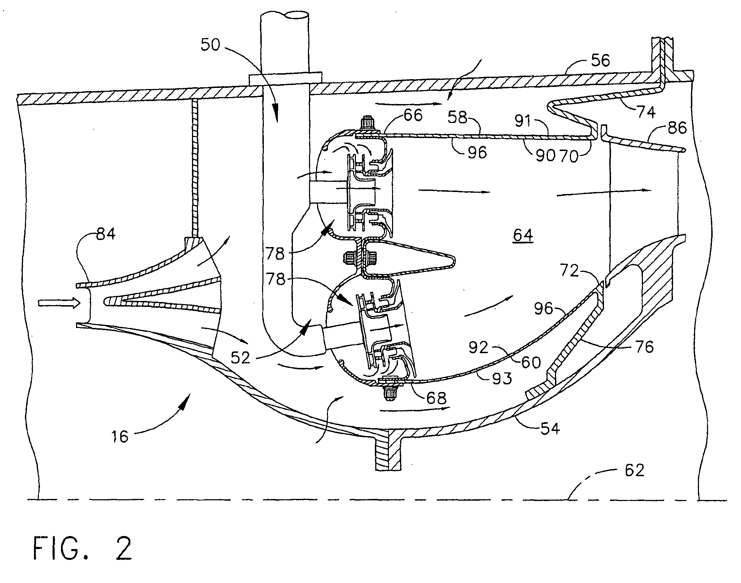

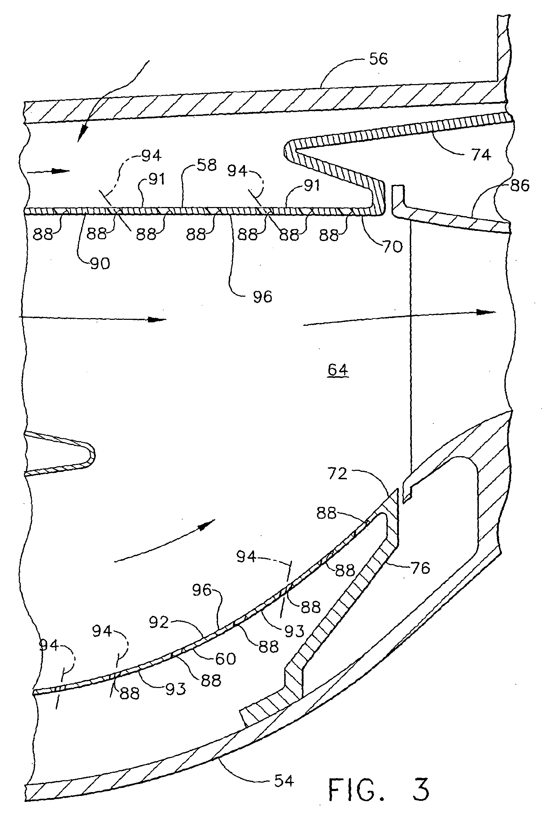

Figure 2 is a cross-sectional view of combustor assembly 16 for use with a gas turbine engine, such as engine 10 shown in Figure 1. Figure 3 is an enlarged view of a portion of combustor assembly 16 taken along area 3. Combustor assembly 16 includes a fuel delivery system 50, a combustor dome assembly 52, an annular inner casing 54, an annular outer casing 56, and annular radially outer and inner combustion liners 58 and 60, respectively. Liners 58 and 60 are positioned coaxially about a central axis 62 of combustor assembly 16 and spaced radially apart to define an annular combustion zone 64 therebetween. Each liner 58 and 60 includes a respective upstream end 66 and 68 and a respective downstream end 70 and 72. Liner upstream ends 66 and 68 are fixedly coupled to combustor dome assembly 52. Outer liner 58 includes an outer flange support 74 extending from a downstream end 70 of liner 58. Flange support 74 is fixedly coupled to combustor outer casing 56. Inner liner 60 includes an inner flange support 76 that extends from a downstream end 72 of liner 60. Inner flange support 76 is fixedly coupled to combustor inner casing 54.

Combustor dome assembly 52 defines an upstream end of combustion zone 64 and includes a plurality of mixer assemblies 78 that are spaced circumferentially around combustor dome assembly 52 for delivering a mixture of fuel and air to combustion zone 64. In the exemplary embodiment, combustor dome assembly 52 is a dual annular combustor (DAC) that includes two annular combustor domes. However, it should be understood that in alternative embodiments combustor dome assembly 52 may include any number of combustor domes. For example, in one embodiment, combustor dome assembly 52 is a single annular combustor (SAC), and, in another embodiment, combustor dome assembly 52 is a triple annular combustor.

An annular diffuser 84 channels air discharged from compressor 14 to the combustor domes and, more specifically, into mixer assemblies 78, wherein the compressed air is mixed with fuel provided by fuel delivery system 50. The fuel/air mixture is then ignited within combustion zone 64 to form combustion gases, which are discharged from the combustion zone 64 through a turbine nozzle 86.

A portion of the compressed air discharged from compressor 14 is channeled in a passageway 85 defined between liner 58 and combustor casing 56, and in a passageway 87 defined between liner 60 and combustor casing 54, for cooling combustor assembly 16. More specifically, the compressed air channeled through passageways 85 and 87 is also channeled into combustion zone 64 through a plurality of openings 88 defined within liners 58 and 60. The compressed air channeled through openings 88 facilitates convectively cooling liners 58 and 60 in regions adjacent openings 88, and also facilitates diluting the combustion gases within combustion zone 64. Furthermore, the air channeled through openings 88 also provides a thin film of cooling air to cool an inner surface 90 and 92 of each respective liner 58 and 60. The thin film of protective cooling air flows along inner surfaces 90 and 92 such that a protective boundary layer is formed between liners 58 and 60 and the hot combustion gases within combustion zone 64 to facilitate insulating liners 58 and 60 from the hot combustion gases.

Each opening 88 is aligned obliquely with respect to a respective outer surface 91 and 93 of each respective liner 58 and 60. The oblique orientation of openings 88 facilitates film cooling of inner surfaces 90 and 92, such that a desired boundary layer thickness is maintained. More specifically, openings 88 each include a centerline axis 94 that is also obliquely aligned with respect to each respective outer surface 91 and 93. In one embodiment, openings 88 and axes 94 are orientated at an approximate angle of 20° with respect to each respective outer surface 91 and 93. In the exemplary embodiment, openings 88 are substantially circular. However, it should be understood that openings 88 may be any desired shape and/or configuration.

To facilitate insulating liners 58 and 60, a thermal barrier coating 96 is applied to inner surfaces 90 and 92. Thermal barrier coating 96 also facilitates reducing an amount of cooling air that must be channeled through openings 88 for a desired combustion gas temperature, or alternatively, may facilitate an increase in combustion gas temperature. During application of thermal barrier coating 96 and operation of gas turbine engine 10 (shown in Figure 1), material from thermal barrier coating 96 may build up within and/or over liner openings 88 thereby partially or completely obstructing openings 88. To facilitate efficient operation of gas turbine engine 10, and more specifically the combustor assembly 16, any thermal barrier coating material obstructing openings 88 may be removed from liners 58 and 60 and from within openings 88. However, using known methods and water nozzles, it may be difficult to remove thermal barrier coating material 96 from liner openings 88 that are adjacent liner supports 74 and 76. More specifically, because of the limited space between liners 58 and 60 and respective liner supports 74 and 76, it may not be possible to position known water nozzles through openings 88 to remove the thermal barrier coating material.

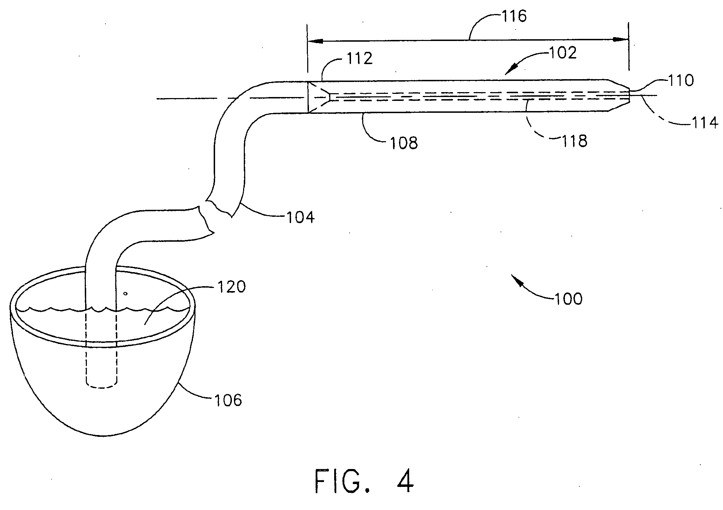

Figure 4 is an front view of an exemplary nozzle assembly 100 that may be used for removing material from liners 58 and 60 (shown in Figures 2 and 3) and openings 88 (shown in Figure 3). Nozzle assembly 100 includes a nozzle 102, a conduit 104, and a fluid source 106. Nozzle 102 includes a body 108 having a first end 110, a second end 112, and a central axis 114 extending through body 108. Nozzle body 108 extends a length 116 measured between first end 110 and second end 112. In the exemplary embodiment, nozzle length 116 is greater than approximately 9 inches. In one embodiment, nozzle length 116 is approximately 10 inches. In another embodiment, nozzle length 116 is approximately 19 inches. However, it will be understood that nozzle length 116 may be any length suitable for removing thermal barrier coating material from liner openings 88 that are adjacent liner supports 74 and/or 76, and such a length 116 will depend on the dimensions and configuration of liner supports 74 and 76. A passageway 118 extends completely through nozzle body 108 from first end 110 to second end 112.

In the exemplary embodiment, nozzle body 108 is substantially cylindrically shaped. However, it should be understood that nozzle body 108 may be any suitable shape. In one embodiment, nozzle body 108 has an outer diameter between approximately 0.2 and 0.3 inches, and an inner diameter, defined by passageway 118, of between approximately 0.07 and 0.09 inches. Furthermore, in the exemplary embodiment nozzle body 108 is formed from heat-treated M2 tool steel. However, it will be understood that nozzle body 108 may be formed from any material and using any process that produces a nozzle body 108 having a hardness of at least 55RC.

Nozzle 102 is coupled to fluid source 106 through a conduit 104 such that passageway 118 is in fluid communication with a fluid 120 contained within fluid source 106. In the exemplary embodiment, fluid 120 includes a mixture of water and a plurality of beads. In one embodiment, the beads are glass beads. In an alternative embodiment, the beads may be fabricated from, but are not limited to, walnut shells, baking soda, and/or corn husks. Fluid source 106 includes a pump (not shown), or other suitable means, to pump fluid 120 from fluid source 106 through conduit 104 and nozzle passageway 118. Beads 122 have an erosion resistance that is lower than an erosion resistance of nozzle body 108 such that beads 122 do not erode material from nozzle body 108 when fluid 120 flows through nozzle passageway 118.

Beads 122 also have an erosion resistance that is lower than an erosion resistance of liners 58 and 60.

To remove thermal barrier coating material that is obstructing liner openings 88 that are adjacent either support 74 or support 76, nozzle 102 is inserted within the respective passageway 85 or 87. Nozzle 102 is positioned within the respective passageway 85 or 87 such that nozzle body 108 and nozzle central axis 114 are obliquely aligned with respect to the respective outer surface 91 or 93 and an opening central axis 94, and such that nozzle passageway 118 is directed towards the respective opening 88. In one embodiment, nozzle body 108 and nozzle central axis 114 are obliquely aligned with respect to the respective outer surface 91 or 93 at an angle of approximately 13°. Fluid 120 is then pumped from fluid source 106 through conduit 104 and passageway 118, which directs fluid 120 into opening 118.

The passage of fluid 120 through opening 88 removes thermal barrier coating material from opening 88. More specifically, nozzle 102 is more elongated in comparison to other known nozzles used for removing thermal barrier coating from combustor liner openings, such that nozzle body central axis 114, and thus passageway 118, are more accurately aligned with opening axes 94 within openings 88 that are adjacent the respective liner support 74 or 76. The inclusion of the beads within fluid 120 increases the errosiveness of fluid 120 in comparison to known methods for removing thermal barrier coating material from combustor liner openings, thereby facilitating removing thermal barrier coating material from openings 88.

The above-described nozzle assembly is cost-effective, highly reliable, and highly accurate for removing material from a combustor liner opening. The nozzle described herein permits material to be removed from a combustor liner opening without aligning the nozzle with a central axis of the opening. More specifically, the nozzle assembly described herein facilitates removing material from a combustor liner opening using an elongated nozzle and a mixture of water and beads. As a result, the nozzle assembly facilitates reducing material removal costs in a cost-effective and reliable manner.

Exemplary embodiments of nozzle assemblies are described above in detail. Components of each assembly may be utilized independently and separately from other components described herein. Each nozzle assembly component can also be used in combination with other nozzle assembly components.

For completeness, various aspects of the invention are set out in the following numbered clauses:
1. A method for removing thermal barrier coating material (96) from at least one opening (88), said method comprising:
   providing a mixture (120) of water and a plurality of beads (122); and
   directing the mixture into the at least one opening to facilitate removing thermal barrier coating material obstructing the opening.
2. A method in accordance with Clause 1 wherein directing the mixture (120) into the at least one opening (88) comprises directing the mixture into at least one opening within a gas turbine combustor liner (58) to facilitate removing material from within the opening:
3. A method in accordance with Clause 1 wherein providing a mixture (120) of water and a plurality of beads (122) comprises providing a mixture of water and a plurality of glass beads.
4. A method in accordance with Clause 1 wherein directing the mixture (120) into the at least one opening (88) comprises directing the mixture into at least one opening using a nozzle (102).
5. A method in accordance with Clause 4 wherein providing a mixture (120) of water and a plurality of beads (122) comprises providing a mixture including a plurality of beads that have an erosion resistance that is less than the nozzle (102).
6. A method in accordance with 4 wherein directing the mixture (120) into at least one opening (88) using a nozzle (102) comprises directing the mixture into at least one opening using a nozzle that has a length (116) greater than approximately 9 inches.
7. A method in accordance with Clause 4 wherein directing the mixture (120) into at least one opening (88) using a nozzle (102) comprises heat treating the nozzle.
8. A nozzle (102) comprising:
   a body (108) having a first end (110 and a second end (112), said body comprising a length (116) greater than 9 inches measured between said first end and said second end; and
   a passageway (118) extending through said nozzle body from said first end to said second end, said passageway comprising a central axis (114) extending therethrough and configured to direct a fluid mixture (120) into at least one opening (88) when said passageway central axis is obliquely aligned with a central axis of the at least one opening to facilitate removing thermal barrier coating material (96) obstructing the at least one opening.
9. A nozzle (102) in accordance with Clause 8 wherein said nozzle body (108) substantially cylindrically shaped, said passageway (118) defining an inner diameter of said nozzle body.
10. A nozzle (102) in accordance with Clause 8 wherein said nozzle body (108) comprises steel.
11. A nozzle (102) in accordance with Clause 10 wherein said nozzle body (108) comprises M2 tool steel.
12. A nozzle (102) in accordance with Clause 8 wherein said nozzle body (108) comprises a length (116) between approximately 9 and 11 inches measured between said body first end (110) and said body second end (112).
13. A nozzle (102) in accordance with Clause 8 wherein said nozzle body (108) comprises a length (116) between approximately 18 and 20 inches measured between said body first end (110) and said body second end (112).
14. A nozzle (102) in accordance with Clause 9 wherein said nozzle body (108) comprises an outer diameter between approximately 0.2 and 0.3 inches and an inner diameter of between approximately 0.070 and 0.090 inches.
15. A nozzle assembly (100) for removing thermal barrier coating material (96) from at least one opening (88) in a gas turbine engine combustor liner (56), said assembly comprising:
   a nozzle (102) comprising a first end (110), a second end (112), and a passageway (118) extending through said nozzle from said first end to said second end, said nozzle comprising a length greater than approximately 9 inches measured between said first end and said second end, said passageway comprising a central axis (114) extending therethrough; and
   a fluid mixture (120) comprising water and a plurality of beads (122), said nozzle configured to direct said fluid mixture into the at least one opening when said passageway central axis is obliquely aligned with a central axis of the at least one opening to facilitate removing thermal barrier coating material obstructing the at least one opening.
16. A nozzle assembly (100) in accordance with Clause 15 wherein said fluid mixture (120) comprises a mixture of water and a plurality of glass beads (122) each having an erosion resistance lower that said nozzle (102).
17. A nozzle assembly (100) in accordance with Clause 15 wherein said nozzle (102) comprises heat-treated M2 tool steel.
18. A nozzle assembly (100) in accordance with Clause 15 wherein said nozzle (102) comprises a length (116) between approximately 9 and 20 inches measured between said body first end (110) and said body second end (112).
19. A nozzle assembly (100) in accordance with Clause 15 wherein said nozzle (102) substantially cylindrically shaped, said passageway (118) defining an inner diameter of said nozzle.
20. A nozzle assembly (100) in accordance with Clause 19 wherein said nozzle (102) comprises an outer diameter of between approximately 0.2 and 0.3 inches and an inner diameter of between approximately 0.070 and 0.090 inches.

## Claims

1. A method for removing thermal barrier coating material (96) from at least one opening (88), said method comprising:
providing a mixture (120) of water and a plurality of beads (122); and
directing the mixture into the at least one opening to facilitate removing thermal barrier coating material obstructing the opening.

2. A method in accordance with Claim 1 wherein directing the mixture (120) into the at least one opening (88) comprises directing the mixture into at least one opening within a gas turbine combustor liner (58) to facilitate removing material from within the opening.

3. A method in accordance with Claim 1 wherein providing a mixture (120) of water and a plurality of beads (122) comprises providing a mixture of water and a plurality of glass beads.

4. A method in accordance with Claim 1 wherein directing the mixture (120) into the at least one opening (88) comprises directing the mixture into at least one opening using a nozzle (102).

5. A method in accordance with Claim 4 wherein providing a mixture (120) of water and a plurality of beads (122) comprises providing a mixture including a plurality of beads that have an erosion resistance that is less than the nozzle (102).

6. A nozzle (102) comprising:
a body (108) having a first end (110 and a second end (112), said body comprising a length (116) greater than 9 inches measured between said first end and said second end; and
a passageway (118) extending through said nozzle body from said first end to said second end, said passageway comprising a central axis (114) extending therethrough and configured to direct a fluid mixture (120) into at least one opening (88) when said passageway central axis is obliquely aligned with a central axis of the at least one opening to facilitate removing thermal barrier coating material (96) obstructing the at least one opening.

7. A nozzle (102) in accordance with Claim 6 wherein said nozzle body (108) substantially cylindrically shaped, said passageway (118) defining an inner diameter of said nozzle body.

8. A nozzle (102) in accordance with Claim 6 wherein said nozzle body (108) comprises steel.

9. A nozzle assembly (100) for removing thermal barrier coating material (96) from at least one opening (88) in a gas turbine engine combustor liner (56), said assembly comprising:
a nozzle (102) comprising a first end (110), a second end (112), and a passageway (118) extending through said nozzle from said first end to said second end, said nozzle comprising a length greater than approximately 9 inches measured between said first end and said second end, said passageway comprising a central axis (114) extending therethrough; and
a fluid mixture (120) comprising water and a plurality of beads (122), said nozzle configured to direct said fluid mixture into the at least one opening when said passageway central axis is obliquely aligned with a central axis of the at least one opening to facilitate removing thermal barrier coating material obstructing the at least one opening.

10. A nozzle assembly (100) in accordance with Claim 9 wherein said fluid mixture (120) comprises a mixture of water and a plurality of glass beads (122) each having an erosion resistance lower that said nozzle (102).
